# EUROPÄISCHE PATENTSCHRIFT

(11) **EP 3 243 975 B1**
(45) Veröffentlichungstag und Bekanntmachung des Hinweises auf die Patenterteilung: **25.03.2020**
(21) Anmeldenummer: 17170313.5
(22) Anmeldetag: 10.05.2017
(51) Int. Cl.: E04D 5/10, E04D 11/00, E04D 13/00, E04D 5/14, D06N 5/00, E21D 11/38, B32B 11/10

(54) **BITUMENBAHN MIT WURZELSCHUTZ**
BITUMEN SHEET WITH A PROTECTION AGAINST PLANT ROOTS
BANDE DE BITUME DOTÉE D'UNE PROTECTION ANTI-RACINES

(30) Priorität: 13.05.2016 EP 16169739
(43) Veröffentlichungstag der Anmeldung: 15.11.2017
(73) Patentinhaber: swisspor Management AG, 6312 Steinhausen (CH)
(72) Erfinder: Rothacker, Serge, 1958 Saint-Léonard (CH); Eberhardt, Raoul, 3942 Niedergesteln (CH)
(74) Vertreter: Koelliker, Robert

(56) Entgegenhaltungen:
- EP-A1- 1 710 337
- WO-A1-2004/015216
- CH-B1- 698 994
- DE-A1- 3 534 075
- DE-A1- 19 915 957
- FR-A1- 2 912 427
- US-A1- 2010 126 663
- US-A1- 2010 162 657

## Beschreibung

Die vorliegende Erfindung betrifft eine Bitumenbahn mit Wurzelschutz zum Abdichten von Bauwerksflächen, ein Verfahren zur Herstellung der Bitumenbahn, abgedichtete Bauwerksflächen erhältlich nach dem Verfahren, sowie die Verwendung der Bitumenbahn zum Abdichten von Bauwerksflächen.

Bauwerksflächen, beispielsweise Gebäudeflächen wie Flachdächer von Gebäuden, Überdachungen und Brücken von Strassen und Eisenbahn, sowie Schwimmbäder, müssen gegen eindringendes Oberflächenwasser geschützt werden, um möglichen Bauschäden vorzubeugen. Als ein geeigneter Schutz haben sich Bitumenbahnen erwiesen, die kosteneffizient auf die abzudichtenden Bauwerksflächen verlegt werden können.

Bei begrünten Bauwerksflächen ist es zudem äusserst wichtig, dass diese auch gegen Pflanzenwurzeln geschützt werden. Denn trotz Abdichtung können früher oder später Pflanzenwurzeln die Abdichtung durchdringen, die Abdichtung zerstören und Schäden am Bauwerk verursachen.

Deshalb schlägt die DE 199 15 957 A1 ein Dachabdeckungsmaterial vor für begrünbare Dächer, insbesondere in Form von armierten Bitumen- oder Kunststoffdachbahnen oder als Flüssigkunststoff für Beschichtungen, welche in den Kunststoff oder in das Bitumen eingearbeitetes Kupferpulver enthalten, wobei Kupfer eine phytotoxische Wirkung zur Reduktion des Wurzelwachstums von Pflanzen zugeschrieben wird. Das pulverförmige Kupferpulver kann in die Trägereinlage einer Dachabdeckungsbahn oder in die obere Bitumendeckschicht eingearbeitet werden. Das eingearbeitete Kupferpulver wird jedoch mit der Zeit ausgewaschen und gelangt so in die Umwelt, und somit u.a. in Gewässer und Böden. Da Kupfer biologisch nicht abbaubar ist, wird es dort akkumuliert. Dieser ungewünschte Kupfereintrag gilt es jedoch zu vermeiden, weshalb Kupfer ein ungeeignetes Mittel zur Verringerung resp. zur Vermeidung des Wurzelwachstums bei Dachabdeckungsmaterialien darstellt.

Die FR 2 912 427 A1 offenbart ein Verfahren zur Herstellung eines Vliesstoffes zur Verwendung als Verstärkung für eine flexible Abdichtungsbahn. Dabei werden Naturfasern, vorzugsweise pflanzlichen Ursprungs, bereitgestellt und gegebenenfalls mit thermoplastischen oder thermofixierbaren Minderheitsfasern vermischt, eine Vliesstoffbahn durch mechanische, pneumatische oder hydraulische Beschichtung gebildet, die erhaltene Vliesstoffbahn zwei aufeinanderfolgenden Konsolidierungsvorgängen unterzogen, die einen Vernadelungsvorgang und einen Bindungsvorgang durch chemisches Bindemittel oder durch Wärmebehandlung umfassen, und schliesslich wird die konsolidierte Vliesstoffbahn einer Hydrophobierungsbehandlung unterzogen.

Aus diesem Grund wurden Bitumenbahnen vorgeschlagen, die ein organisches Wurzelschutz-Additiv, wie beispielsweise ein Biozid, insbesondere ein Herbizid, enthalten. Allerdings zeigte sich, dass solche Wurzelschutz-Additive mit der Zeit herausgewaschen werden, was die Wurzelschutzfunktion deutlich reduziert. Zudem gelangt das ausgewaschene Wurzelschutz-Additiv in den Boden und/oder in Gewässer, was nicht nur aufgrund der immer strengeren gesetzlichen Anforderungen unerwünscht ist.

Um diesen Nachteil zu beseitigen, schlägt die CH 698 994 B1 eine Bitumenbahn vor, die eine einzige, durchgehende Bitumenschicht mit Wurzelschutz-Additiv umfasst, wobei auf der gebäudeabgewandten Seite der applizierten Bitumenschicht eine durchgehende wasserdichte, nichtwurzelfeste Dichtschicht aus beispielsweise PP oder PE angeordnet ist. Die Bitumenschicht kann zudem optional noch auf der gebäudezugewandten Seite der applizierten Bitumenschicht eine weitere Trennfolie und innerhalb der Bitumenschicht ein Polyestervlies aufweisen. Nachteilig daran ist jedoch, dass die mit Folie beschichtete Oberfläche der Bitumenbahn nur sehr schlecht mit feinen Mineralpartikeln wie Talk, Sand und/oder Schieferplättchen beschichtet werden kann. Eine solche Beschichtung ist jedoch als UV-, Wetter- und/oder Begehbarkeitsschutz hilfreich. Auch besteht die Gefahr, dass die Folie an einigen Orten beispielsweise durch scharfe Steine aufgeschnitten wird, wodurch an diesen Stellen die Folie keinen Schutz mehr bietet. Nicht zu vernachlässigen sind insbesondere auch die Randzonen zwischen zwei verlegten Bitumenbahnen. Denn diese bilden eine Schwachstelle, durch welche das Wurzelschutz-Additiv schneller ausgewaschen wird und Pflanzenwurzeln in den Untergrund eindringen können.

Aufgabe der vorliegenden Erfindung ist daher eine Bitumenbahn bereitzustellen, welche das Eindringen von Pflanzenwurzeln - insbesondere auch bei den Randzonen zwischen zwei verlegten Bitumenbahnen - im Wesentlichen verhindert, wobei ein allfällig eingesetztes organisches Wurzelschutz-Additiv nicht oder nur äusserst langsam ausgewaschen werden soll. Die Oberflächen der Bitumenbahn sollen zudem einfach mit feinen Mineralpartikeln beschichtbar sein, um einen erhöhten UV-, Wetter- und Begehbarkeitsschutz zu erhalten.

Diese Aufgabe konnte überraschenderweise gelöst werden mit einer Bitumenbahn mit Wurzelschutz (1) zum Abdichten von Bauwerksflächen nach dem Anspruch 1, umfassend eine obere Bitumenschicht (2), eine untere Bitumenschicht (3) eine Verstärkungsschicht (4) und ein Wurzelschutz-Additiv, wobei die untere Bitumenschicht (3) und/oder die Verstärkungsschicht (4) mindestens ein organisches Wurzelschutz-Additiv enthält und die obere Bitumenschicht (2) kein Wurzelschutz-Additiv enthält, ausser gegebenenfalls entlang eines Teils eines Randbereichs (6) an einem Rand R2 der Bitumenbahn (1), wobei die Verstärkungsschicht (4) zwischen der oberen Bitumenschicht (2) und der unteren Bitumenschicht (3), innerhalb der oberen Bitumenschicht (2) und/oder innerhalb der unteren Bitumenschicht (3) angeordnet ist, wobei die untere Bitumenschicht (3), sowie die obere Bitumenschicht (2) und die Verstärkungsschicht (4), entlang mindestens eines Randes der Bitumenbahn (1) eine seitliche Randschicht (5) umfasst, die kein Wurzelschutz-Additiv enthält, und so einen ersten Rand R1 der Bitumenbahn (1) bildet.

Beansprucht wird auch ein Verfahren zur Herstellung der erfindungsgemässen Bitumenbahn (1), wobei die obere Bitumenschicht (2) mit einer Bitumenmischung BM-2 und die untere Bitumenschicht (3) mit einer Bitumenmischung BM-3 hergestellt wird, wobei das organische Wurzelschutz-Additiv
a) in die Bitumenmischung BM-3 eingearbeitet wird bevor die Bitumenschicht (3) hergestellt wird, wobei somit die Bitumenmischung BM-3 das organische Wurzelschutz-Additiv umfasst, und/oder
b) mit der Verstärkungsschicht (4) in Kontakt gebracht wird, bevor und/oder während die Verstärkungsschicht (4) und die Bitumenmischungen BM-2 und BM-3 zur Bitumenbahn (1) verarbeitet werden.

Zudem wird auch ein Verfahren zum Abdichten von Bauwerksflächen mit der erfindungsgemässen Bitumenbahn (1) und/oder der erfindungsgemäss hergestellten Bitumenbahn (1) beansprucht, wobei eine erste Bitumenbahn (11) auf der Bauwerksfläche verlegt wird und eine zweite Bitumenbahn (12) so auf der Bauwerksfläche verlegt wird, dass ein Rand der zweiten Bitumenbahn (12) einen Rand der ersten Bitumenbahn (11) überlappt, wobei die unteren Bitumenschichten (3) der ersten und zweiten Bitumenbahn (11, 12) bevorzugt der Bauwerksfläche zugewandt angeordnet sind.

Beansprucht werden zudem auch abgedichtete Bauwerksflächen erhältlich nach dem erfindungsgemässen Verfahren sowie die Verwendung der erfindungsgemässen Bitumenbahn (1) und erfindungsgemäss hergestellten Bitumenbahn (1) zum Abdichten von Bauwerksflächen, insbesondere Gebäudedächer, von Innen- und Aussenbereichen von Tunnels, Überdachungen wie Strassen- und/oder Eisenbahn-Überdachungen, Brücken sowie Schwimmbäder.

Die erfindungsgemässe Bitumenbahn (1), die erfindungsgemäss hergestellte Bitumenbahn (1), die erfindungsgemäss abgedichteten Bauwerksflächen sowie die erfindungsgemässe Verwendung der Bitumenbahn (1) weisen viele Vorteile auf. Überraschenderweise wurde gefunden, dass die erfindungsgemässe Bitumenbahn (1) und die nach dem erfindungsgemässen Verfahren mit erfindungsgemässen Bitumenbahnen (1) hergestellten abgedichteten Bauwerksflächen einen hervorragenden Schutz vor eindringenden Pflanzenwurzeln aufweisen, wobei das Auswaschen des organischen Wurzelschutz-Additivs drastisch reduziert wird. Dadurch verlängert sich die Wirkdauer des Wurzelschutz-Additivs deutlich, d.h. die erfindungsgemässe Bitumenbahn (1) und die nach erfindungsgemässem Verfahren erhaltenen abgedichteten Bauwerksflächen weisen über einen wesentlich längeren Zeitraum einen sehr hohen Wurzelschutz auf - und dies bei gleichbleibender Konzentration des Wurzelschutz-Additivs. Werden Bitumenbahnen (1) mit erfindungsgemässer Randzone (5) und/oder Randbereich (6) eingesetzt, wird das Auswaschen des organischen Wurzelschutz-Additivs weiter reduziert oder sogar ganz verhindert, wobei die verlegten Bitumenbahnen (11,12) einen hervorragenden Schutz vor eindringenden Pflanzenwurzeln bieten. Dies gilt insbesondere für den kritischen Randbereich zwischen zwei verlegten Bitumenbahnen (11,12). Die Oberflächen der erfindungsgemässen Bitumenbahn (1) können zudem auf einfache Art und Weise mit feinen Mineralpartikeln beschichtet werden, wodurch die Bitumenbahn (1) einen erhöhten UV-, Wetter- und Begehbarkeitsschutz erhalten. Somit eignen sich die erfindungsgemässe Bitumenbahn (1), die nach dem erfindungsgemässen Verfahren hergestellte Bitumenbahn (1) hervorragend zum Abdichten von Bauwerksflächen resp. als abgedichtete Bauwerksflächen, wie beispielsweise begrünbare Dächer.

Beim Verfahren zur Herstellung der erfindungsgemässen Bitumenbahn (1) wurde überraschenderweise gefunden, dass das organische Wurzelschutz-Additiv auf einfache und schnelle Art und Weise in die Bitumenmischung BM-3 homogen eingearbeitet werden kann, ohne dass eine Separierung des Wurzelschutz-Additivs von der Bitumenmischung erfolgt. Dies ist auch nach längerer Zeit sowie nach einer allfälligen Hitze-Behandlung während dem erfindungsgemässen Abdichten der erfindungsgemässen Bauwerksflächen der Fall.

Die erfindungsgemäss verlegten Bitumenbahnen (11,12) sowie die erfindungsgemäss abgedichtete Bauwerksflächen weisen zudem an der zur Bauwerksfläche entgegengesetzten Oberfläche bevorzugt kein Wurzelschutz-Additiv auf. Dadurch wird das Auswaschen des Additivs weiter reduziert oder sogar verunmöglicht.

Die erfindungsgemäss verlegten Bitumenbahnen (11,12) umfassend einen Rand R1 und einen Rand R2 weisen zudem entlang der Berührungsflächen, d.h. Überlappungsbereichen, der verlegten Bitumenbahnen (11,12) einen im Wesentlichen horizontalen Bereich auf bei welchem mindestens eine, insbesondere beide, der sich überlappenden Bitumenbahnen (11,12) ein Wurzelschutz-Additiv umfasst. Falls nun eine Pflanzenwurzel von der zur Bauwerksfläche entgegengesetzten Oberfläche der erfindungsgemäss verlegten Bitumenbahnen (11,12), die bevorzugt frei von Wurzelschutz-Additiv ist, entlang des horizontalen Überlappungsbereichs der verlegten Bitumenbahnen (11,12) zur Bauwerksfläche hindurch wachsen möchte, wird das weitere Wachstum der Pflanzenwurzel durch die Anwesenheit von mindestens einem Wurzelschutz-Additiv in mindestens einer, bevorzugt beiden, Bitumenbahnen (11,12) des Überlappungsbereichs verhindert. Somit werden verlegte Bitumenbahnen (11,12) erhalten, welche sowohl einen hoch effizienten Wurzelschutz aufweisen als auch kein oder zumindest nur ein stark reduziertes Auswaschen des Wurzelschutz-Additivs erlauben.

### Bitumenbahn mit Wurzelschutz (1)

Der Begriff Bitumenbahn umfasst erfindungsgemäss Dachdichtungsbahnen und Dachpappe, welche oft lose, d.h. nicht vollflächig, verlegt und gegebenenfalls verklebt werden, sowie Bitumen-Schweissbahnen. Bitumen-Schweissbahnen werden in der Regel vollflächig verlegt und geflämmt, wodurch man mehrere Bahnen überlappend miteinander wasserdicht verschweissen kann.

Die erfindungsgemässe Bitumenbahn (1) mit Wurzelschutz, d.h. mit Wurzelschutzfunktion, umfasst u.a. eine obere Bitumenschicht (2), eine untere Bitumenschicht (3) und mindestens eine Verstärkungsschicht (4). Die Verstärkungsschicht (4) ist zwischen der oberen Bitumenschicht (2) und der unteren Bitumenschicht (3) und/oder innerhalb der unteren Bitumenschicht (3) angeordnet.

Unter dem Begriff obere Bitumenschicht (2) wird erfindungsgemäss diejenige Bitumenschicht verstanden, welche - nachdem die Bitumenbahn (1) auf einer Bauwerksfläche zum Abdichten derselben angeordnet ist - die zur Bauwerksfläche entgegengesetzte Oberfläche der Bitumenbahn (1) bildet.

Unter dem Begriff untere Bitumenschicht (3) wird erfindungsgemäss diejenige Bitumenschicht verstanden, welche - nachdem die Bitumenbahn (1) auf einer Bauwerksfläche zum Abdichten derselben angeordnet ist - die der Bauwerksfläche zugewandte Oberfläche der Bitumenbahn (1) bildet.

Damit die Bitumenbahn (1) erfindungsgemäss zum Abdichten auf eine Bauwerksfläche verlegt werden kann, ist typischerweise die obere Bitumenschicht (2) und/oder die untere Bitumenschicht (3) für den Anwender so gekennzeichnet, dass sie klar voneinander unterschieden werden können. Geeignete Kennzeichnungen sind dem Fachmann bekannt. Sie kann beispielsweise mittels Beschriftung und/oder geeigneter Farbe erfolgen. Es ist auch möglich, dass die obere Bitumenschicht (2) der Bitumenbahn (1) mit Mineralpartikeln wie Talk, Sand und/oder Schieferplättchen beschichtet ist, wodurch der Fachmann eindeutig die obere Bitumenschicht (2) von der unteren Bitumenschicht (3) unterscheiden kann.

Die Schichtdicke SD-1 der erfindungsgemässen Bitumenbahn (1) beträgt vorteilhafterweise etwa 1 bis 10 mm, bevorzugt etwa 2 bis 8 mm, insbesondere etwa 3 bis 7 mm. Die Schichtdicke SD-2 der oberen Bitumenschicht (2) und die Schichtdicke SD-3 der unteren Bitumenschicht (3) weisen bevorzugt je eine Schichtdicke von etwa 0,1 bis 5 mm, bevorzugt von etwa 0,5 bis 3 mm auf. Die Schichtdicke SD-2 der oberen Bitumenschicht (2) ist bevorzugt gleich gross oder kleiner ist als die Schichtdicke SD-3 der unteren Bitumenschicht (3), wobei die Schichtdicken SD-2 und SD-3 zusammen typischerweise die Schichtdicke SD-1 der Bitumenbahn (1) bilden. Ist die Verstärkungsschicht (4) Teil der oberen Bitumenschicht (2), wird die Schichtdicke der Verstärkungsschicht (4) der Schichtdicke SD-2 zugerechnet. Ist die Verstärkungsschicht (4) Teil der unteren Bitumenschicht (3), wird die Schichtdicke der Verstärkungsschicht (4) der Schichtdicke SD-3 zugerechnet. Ist die Verstärkungsschicht (4) zwischen der oberen Bitumenschicht (2) und unteren Bitumenschicht (3), wird die Schichtdicke der Verstärkungsschicht (4) typischerweise je hälftig der Schichtdicke SD-2 und der Schichtdicke SD-3 zugerechnet. Die Schichtdicken SD-1, SD-2 und SD-3 werden beispielsweise optisch mit dem Lichtmikroskop und/oder einer Messnadel gemessen, wobei der Mittelwert von 5 Messungen ermittelt wird. Als bevorzugte Messmethode wird das Lichtmikroskop verwendet.

Die Verstärkungsschicht (4) kann ein Gewebe und/oder ein Vlies umfassen. Geeignete Verstärkungsschichten (4) sind dem Fachmann bekannt. Nicht limitierende Beispiele umfassen Polyestervlies, Glasvlies, Glasgewebe, Jutegewebe, Metallfolie wie beispielsweise Aluminiumfolie und/oder Kupferfolie, wobei die Metallfolie gegebenenfalls ein Armierungsgitter umfassen kann.

Die Verstärkungsschicht (4) ist zwischen der oberen Bitumenschicht (2) und der unteren Bitumenschicht (3), innerhalb der oberen Bitumenschicht (2) und/oder innerhalb der unteren Bitumenschicht (3) angeordnet.

Ist die Verstärkungsschicht (4) innerhalb der oberen Bitumenschicht (2) angeordnet, wird die Bitumenschicht (2) somit in eine Bitumenschicht (2a) und eine Bitumenschicht (2b) unterteilt, wobei die Bitumenschicht (2b) zwischen der Verstärkungsschicht (4) und der unteren Bitumenschicht (3) angeordnet ist. Die Bitumenschicht (2a) befindet sich an derjenigen Seite der Verstärkungsschicht (4), welche der Bitumenschicht (2b) gegenüberliegt, wobei die Bitumenschicht (2a) und die Bitumenschicht (2b) die gleiche oder eine unterschiedliche Zusammensetzung aufweisen.

Ist die Verstärkungsschicht (4) innerhalb der unteren Bitumenschicht (3) angeordnet, wird die Bitumenschicht (3) somit in eine Bitumenschicht (3a) und eine Bitumenschicht (3b) unterteilt, wobei die Bitumenschicht (3a) zwischen der oberen Bitumenschicht (2) und der Verstärkungsschicht (4) angeordnet ist. Die Bitumenschicht (3b) befindet sich an derjenigen Seite der Verstärkungsschicht (4), welche der Bitumenschicht (3a) gegenüberliegt, wobei die Bitumenschicht (3a) und die Bitumenschicht (3b) die gleiche oder eine unterschiedliche Zusammensetzung aufweisen.

In der erfindungsgemässen Bitumenbahn (1) umfasst mindestens die untere Bitumenschicht (3) sowie die obere Bitumenschicht (2) und die Verstärkungsschicht (4) entlang mindestens eines Randes der Bitumenbahn (1) eine, von der Bitumenschicht (2) und typischerweise der Bitumenschicht (3) unterschiedliche, seitliche Randschicht (5) umfasst, die kein Wurzelschutz-Additiv enthält, und so einen ersten Rand R1 der Bitumenbahn (1) bildet. Durch die Anwesenheit der seitlichen Randschicht (5) wird das Auswaschen des organischen Wurzelschutz-Additivs bei Rändern von Bitumenbahnen verhindert oder zumindest deutlich reduziert. Werden beispielsweise beim Verlegen der Bitumenbahnen zwei Bitumenbahnen seitlich leicht übereinander gelegt, so ist bevorzugt der Rand der oberen Bitumenbahn mit der Randschicht (5) - und somit als Rand R1 - ausgestattet.

Als Rand R1 wird somit eine seitliche Randschicht (5) ohne Wurzelschutz-Additiv verstanden, welche zumindest an der seitlichen Begrenzung der unteren Bitumenschicht (3) angeordnet ist und typischerweise in einem nachfolgenden Schritt seitlich an der Bitumenbahn (1) angeordnet wird. Somit kann die seitliche Randschicht (5), d.h. der Rand R1, seitlich nur die untere Bitumenschicht (3), welche ein organisches Wurzelschutz-Additiv umfasst, oder auch zusätzlich die obere Bitumenschicht (2), welche kein Wurzelschutz-Additiv enthält, abdecken. Umfasst die Verstärkungsschicht (4) ein Wurzelschutz-Additiv, erstreckt sich vorteilhafterweise die seitliche Randschicht (5) auch über die Verstärkungsschicht (4). Durch diese Anordnung mit Rand R1 ist somit vorteilhafterweise jegliche Schicht, welche ein Wurzelschutz-Additiv enthält, mit der seitlichen Randschicht (5) ohne Wurzelschutz-Additiv bedeckt.

In der erfindungsgemässen Bitumenbahn (1) wird mindestens ein Rand der Bitumenbahn (1) und somit die untere Bitumenschicht (3), die Verstärkungsschicht (4) sowie die obere Bitumenschicht (2) von der seitlichen Randschicht (5) ohne Wurzelschutz-Additiv, d.h. vom Rand R1, bedeckt.

Die Randschicht (5) besitzt eine Breite, d.h. eine zur Schichtdicke der Bitumenbahn (1) vertikal gemessenen Ausdehnung, von beispielsweise etwa 2 bis 10 cm, insbesondere von etwa 4 bis 8 cm. Diese Breite kann typischerweise optisch, gegebenenfalls unter Zuhilfenahme eines Lichtmikroskops und/oder eines Messschiebers oder einer Schublehre gemessen werden.

In einer anderen vorteilhaften Ausführungsform der erfindungsgemässen Bitumenbahn (1) weist die obere Bitumenschicht (2) entlang mindestens eines Randes R2 der Bitumenbahn (1) einen Randbereich (6) auf. Dabei umfasst mindestens ein Teil des Randbereichs (6) entweder eine obere Bitumenschicht mit mindestens einem organischen Wurzelschutz-Additiv, oder keine obere Bitumenschicht, wodurch die untere Bitumenschicht (3) und/oder die Verstärkungsschicht (4) anstelle der Bitumenschicht (2) die Oberfläche der Bitumenbahn (1) bilden. Durch den Randbereich (6) mit organischem Wurzelschutz-Additiv wird verhindert, dass Wurzeln im Überlappungsbereich von zwei nebeneinander angeordneten Bitumenbahnen (1) zwischen den beiden Bitumenbahnen, wie beispielsweise einer ersten Bitumenbahn (11) mit Randbereich (6) und einer zweiten Bitumenbahn (12), hindurch wachsen können.

In einer weiteren vorteilhaften Ausführungsform der erfindungsgemässen Bitumenbahn (1) umfasst die Bitumenbahn (1) einen Randbereich (6) mit einem Rand R2 und zusätzlich einen Randbereich (5) mit einem Rand R1, wobei der Rand R2 bevorzugt an der Seite der Bitumenbahn (1) angeordnet ist, die dem Rand R1 der Bitumenbahn (1) gegenüber liegt. Somit ist der Rand R2 verschieden vom Rand R1.

Der Randbereich (6) kann die ganze Schichtdicke SD-2 der oberen Bitumenschicht (2) umfassen, oder einen Teil davon. Wird nur ein Teil der Schicht (2) umfasst, wird bevorzugt derjenige Teil umfasst, welcher einen Teil der Oberfläche der erfindungsgemässen Bitumenbahn (1) bildet.

Der Randbereich (6) besitzt eine Breite, d.h. eine zur Schichtdicke der Bitumenbahn (1) vertikal gemessene Ausdehnung, von beispielsweise 6 bis 8 cm. Diese Breite kann typischerweise optisch, gegebenenfalls unter Zuhilfenahme eines Lichtmikroskops und/oder eines Messschiebers oder Schublehre gemessen werden. Im Zweifelsfall wird sie mit einem Lichtmikroskop gemessen.

Die Zusammensetzungen der oberen Bitumenschicht (2), der unteren Bitumenschicht (3), der seitlichen Randschicht (5) und des Randbereichs (6) können - bis auf das Wurzelschutz-Additiv - alle gleich, teilweise gleich oder alle voneinander verschieden sein. Die obere Bitumenschicht (2) und die seitliche Randschicht (5) enthalten im Wesentlichen kein Wurzelschutz-Additiv. Die untere Bitumenschicht (3) und der Randbereich (6) können das gleiche und/oder ein anderes organisches Wurzelschutz-Additiv enthalten. Zudem kann der Gehalt an organischem Wurzelschutz-Additiv in der Schicht (3) und dem Bereich (6) gleich oder verschieden sein.

Geeignete Zusammensetzungen der Schichten (2), (3), (5) und des Bereichs (6) sind dem Fachmann bekannt. Typischerweise basieren sie auf etwa 30 bis 70 Gew.-%, bevorzugt auf etwa 40 bis 60 Gew.-%, Bitumen und etwa 20 bis 40 Gew.-%, bevorzugt auf etwa 25 bis 35 Gew.-%, mineralischen Füllstoffen. Zudem können sie beispielsweise bis 30 Gew.-%, bevorzugt bis 25 Gew.-%, Kunststoff, wie zum Beispiel Styrol-Butadien-Styrol und/oder ataktisches Polypropylen, umfassen, wobei sich die Gewichtsangaben auf das Gesamtgewicht der jeweiligen Schichten (2), (3), (5) resp. des Bereichs (6) beziehen. Zusätzlich können die Schichten (2), (3), (5) und der Bereich (6) auch weitere Zusatzstoffe enthalten. Bevorzugte Zusatzstoffe sind beispielsweise für die Schichten (3) und (6) mindestens ein organisches Wurzelschutz-Additiv.

Das organische Wurzelschutz-Additiv, erfindungsgemäss auch nur als Wurzelschutz-Additiv bezeichnet, verhindert das weitere Wachstum von Wurzeln.

Geeignete organische Wurzelschutz-Additive sind dem Fachmann bekannt. Das organische Wurzelschutz-Additiv kann ein Herbizid, ein Fungizid und/oder ein Biozid umfassen, wobei Herbizide bevorzugt sind.

Organische Wurzelschutz-Additive können beispielsweise in reiner Form, als Emulsion, als Suspension, als Lösung und/oder als Mischung eingesetzt werden, wobei als Mischung beispielsweise eine Mischung aus Polymer und organischem Wurzelschutz-Additiv verwendet werden kann.

Geeignete organische Wurzelschutz-Additive umfassen auch deren Vorstufen, beispielsweise Ester von geeigneten Verbindungen, welche zum Beispiel durch Hydrolyse das gewünschte Wurzelschutz-Additiv freisetzen, sowie deren Reaktionsprodukte, beispielsweise Hydrolyseprodukte von Wurzelschutz-Additiven. Zudem werden die reinen enantiomeren Formen von geeigneten Wurzelschutz-Additiven wie auch deren racemischen Gemische mitumfasst.

Nicht limitierte Beispiele geeigneter organischer Wurzelschutz-Additive umfassen Preventol® B2, Preventol® B5, Preventol® RC, Herbitect® HE, Herperit®, Sulcotrion, Mesotrion, Atrizin®, Terbuthylazin, Isoproturon, Glyphosat, Methylchlorphenoxypropionsäure, auch Mecoprop (MCPP) genannt, C₁- bis C₁₈- Ester von Mecoprop wie beispielsweise 2-Ethylhexylester Mecoprop oder Glykolester Mecoprop, MCPA oder 2-Methyl-4-chlorphenoxyessigsäure, 4-Chlor-2-Methylphenol (4-CMP), 2,4-Dichlorphenoxyessigsäure, auch 2,4-D genannt, Dicamba oder 3,6-Dichlor-2-methoxybenzoesäure, Dichlorprop, Diazinon, Diuron, Carbendazim, Terbutryn, Irganol, IPBC, Isothiazoninon, TectoGreen MP, TectoGreen M, TectoGreen MP-E, TectoGreen P, TectoGreen P-5, Isothiazolinon-Verbindungen, Tebuconazol, Organozinn-Verbindungen und/oder Bleichromat. Bevorzugt sind insbesondere Herbitect® HE, Herperit®, TectoGreen MP, TectoGreen M, TectoGreen MP-E, TectoGreen P, TectoGreen P-5 sowie C₁- bis C₁₈- Ester von Mecoprop wie beispielsweise 2-Ethylhexylester Mecoprop und/oder Glykolester Mecoprop.

Als geeignete Wurzelschutz-Additive werden erfindungsgemäss Metalle wie Kupfer oder Silber nicht umfasst. Zudem sind Metallsalze als Wurzelschutz-Additive weniger bevorzugt.

In einer bevorzugten Ausführungsform umfasst die Bitumenbahn (1) das organische Wurzelschutz-Additiv in einer Menge von 0,01 bis 3 Gew.-%, bevorzugt von 0,05 bis 1 Gew.-%, bezogen auf die Gesamtmasse der Bitumenbahn (1) mit organischem Wurzelschutz-Additiv, wobei der Gehalt und die Art des Wurzelschutz-Additivs in den Bitumenschichten (3a), (3b) und (6) und der Verstärkungsschicht (4) gleich oder verschieden sein kann.

Umfasst die Verstärkungsschicht (4) ein organisches Wurzelschutz-Additiv, kann das Additiv beispielsweise auf die Verstärkungsschicht (4) aufgesprüht werden und/oder die Verstärkungsschicht (4) kann in ein - und/oder mit einem organischen Wurzelschutz-Additiv getränkt werden.

In einer weiteren Ausführungsform können zudem auf mindestens einer Oberfläche der erfindungsgemässen Bitumenbahn (1) feine Mineralpartikel wie Talk, Sand und/oder Schieferplättchen angebracht sein. Dies kann beispielsweise durch Aufstreuen der Mineralpartikel auf die Bitumenbahn (1) erfolgen.

Es ist auch möglich, dass auf mindestens einer Oberfläche der erfindungsgemässen Bitumenbahn (1) eine Folie, insbesondere eine Trennfolie, beispielsweise aus Polypropylen (PP) oder Polyethylen (PE), angebracht ist.

In einer Ausführungsform ist eine Oberfläche der erfindungsgemässen Bitumenbahn (1) mit feinen Mineralpartikeln beschichtet, während beispielsweise die andere Oberfläche mit einer Folie beschichtet ist.

In einer weiteren, bevorzugten Ausführungsform ist auf mindestens einer Oberfläche, insbesondere auf der oberen Bitumenschicht (2), keine Folie, insbesondere keine PP oder PE Folie, angebracht.

### Verfahren zur Herstellung der Bitumenbahn (1)

Beim erfindungsgemässen Verfahren zur Herstellung der erfindungsgemässen Bitumenbahn (1) wird die obere Bitumenschicht (2) mit einer Bitumenmischung BM-2 und die untere Bitumenschicht (3) mit einer Bitumenmischung BM-3 hergestellt. Dabei kann in einer ersten Ausführungsform a) das organische Wurzelschutz-Additiv in die Bitumenmischung BM-3 eingearbeitet werden bevor mit der Mischung BM-3 die Bitumenschicht (3) hergestellt wird, wodurch die Bitumenmischung BM-3 das organische Wurzelschutz-Additiv umfasst. In einer anderen Ausführungsform b) - zusätzlich oder alternativ zur ersten Ausführungsform a) - kann das organische Wurzelschutz-Additiv mit der Verstärkungsschicht (4) in Kontakt gebracht werden, bevor und/oder während die Verstärkungsschicht (4) und die Bitumenmischungen BM-2 und BM-3 zur Bitumenbahn (1) verarbeitet werden.

In einer bevorzugten Ausführungsform der erfindungsgemäss hergestellten Bitumenbahn (1) wird die obere und untere Bitumenschicht (2, 3) und die Verstärkungsschicht (4) miteinander in Kontakt gebracht und beim Rand R1 ein Teil der unteren Bitumenschicht (3) abgetragen und durch eine Bitumenschicht ohne Wurzelschutz-Additiv, insbesondere mit der Bitumenmischung BM-2, ersetzt.

Umfasst die erfindungsgemäss hergestellte Bitumenbahn (1) einen Randbereich (6), wird beim Rand R2 der Randbereich (6) hergestellt indem beim Rand R2 a) auf die untere Bitumenschicht (3) und/oder auf die Verstärkungsschicht (4) keine Bitumenmischung BM-2 aufgetragen wird, wodurch keine obere Bitumenschicht (2) gebildet wird, und/oder b) die Bitumenmischung BM-2 nach deren Auftrag und/oder die daraus hergestellte obere Bitumenschicht (2), oder ein Teil davon, entfernt wird. Anschliessend wird gegebenenfalls beim Rand R2, wo die Bitumenmischung BM-2 und/oder die obere Bitumenschicht (2) entfernt oder nicht gebildet wurde, eine organisches Wurzelschutz-Additiv enthaltende Bitumenmischung BM-6 aufgetragen.

Wird die Bitumenmischung BM-2 nach deren Auftrag und/oder die daraus hergestellte obere Bitumenschicht (2), oder ein Teil davon, entfernt, kann vorteilhafterweise vorgängig entlang des Randbereichs (6) eine Folie aufgetragen werden, welche anschliessend zusammen mit der zu entfernenden Bitumenmischung BM-2 und/oder Bitumenschicht (2) entfernt werden kann.

### Verfahren zum Abdichten von Bauwerksflächen

Beim erfindungsgemässen Verfahren zum Abdichten von Bauwerksflächen mit der erfindungsgemässen und/oder erfindungsgemäss hergestellten Bitumenbahn (1) wird eine erste Bitumenbahn (11) auf der Bauwerksfläche verlegt und eine zweite Bitumenbahn (12) so auf der Bauwerksfläche verlegt, dass ein Rand der zweiten Bitumenbahn (12) einen Rand der ersten Bitumenbahn (11) überlappt. Dabei werden die Bitumenbahnen (11, 12) so auf der Bauwerksfläche verlegt, dass die unteren Bitumenschichten (3) der ersten und zweiten Bitumenbahn (11, 12) bevorzugt der Bauwerksfläche zugewandt angeordnet sind, wobei die Bitumenbahnen (11, 12) beispielsweise mittels Schweissverfahren, Kaltverklebung, Giessverfahren und/oder Bürstenstreichverfahren miteinander verbunden werden können. Die erste Bitumenbahn (11) und eine zweite Bitumenbahn (12) sind erfindungsgemässe Bitumenbahnen (1) und können in deren Ausführung identisch oder unterschiedlich sein.

In einer bevorzugten Ausführungsform des erfindungsgemässen Verfahren zum Abdichten von Bauwerksflächen werden die Bitumenbahnen (11, 12) so verlegt, dass der Rand der ersten Bitumenbahn (11), welcher vom Rand der zweiten Bitumenbahn (12) überlappt wird, ein Rand R2 mit Randzone (6) ist. Dabei wird der Rand der zweiten Bitumenbahn (12) bevorzugt in oder auf die Randzone (6) des Randes R2 gelegt, wobei der überlappende Rand der zweiten Bitumenbahn (12) bevorzugt als Rand R1 ausgebildet ist.

Mit dem erfindungsgemässen Verfahren zum Abdichten von Bauwerksflächen mit der erfindungsgemässen Bitumenbahn (1) und der nach dem erfindungsgemässen Verfahren hergestellten Bitumenbahn (1) können im Wesentlichen alle Bauwerksflächen abgedichtet werden. Dem Fachmann sind geeignete Bauwerksflächen bekannt.

Besonders geeignete Bauwerksflächen zum Abdichten mit der erfindungsgemässen Bitumenbahn (1) umfassen Gebäudedächer, Innen- und Aussenbereiche von Tunnels, Überdachungen wie Strassen- und/oder Eisenbahn-Überdachungen, Brücken und/oder Schwimmbäder, wobei die Bauwerksflächen beispielsweise Beton, Metall, Stahl, Stahlblech und/oder Holz umfassen können.

### Verwendung der Bitumenbahn (1)

Die erfindungsgemässe Bitumenbahn (1) und die erfindungsgemäss hergestellte Bitumenbahn (1) können vielfältig verwendet werden. Bevorzugt werden sie zum Abdichten von Bauwerksflächen verwendet, wobei bevorzugte Bauwerksflächen Gebäudedächer, Innen- und Aussenbereiche von Tunnels, Strassen- und/oder Eisenbahn-Überdachungen, Brücken und/oder Schwimmbäder umfassen.

Besonders geeignete Bauwerksflächen für die erfindungsgemässe Verwendung umfassen die Bauwerksflächen als Baumaterialien Beton, Metall, Stahl, Stahlblech und/oder Holz.

In einer besonders bevorzugten Verwendung werden die abgedichteten Bauwerksflächen, insbesondere die Gebäudedächer, begrünt.

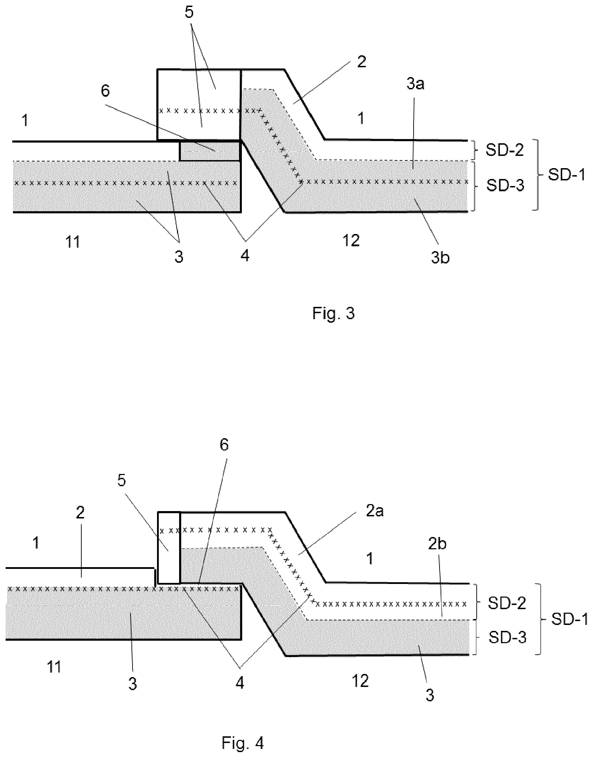

Im Folgenden werden nicht-limitierende, bevorzugte Ausführungsformen der erfindungsgemässen und erfindungsgemäss erhaltenen Bitumenbahn (1) und mit der Bitumenbahn (1) abgedichtete Bauwerksflächen erhalten mit dem erfindungsgemässen Verfahren zum Abdichten von Bauwerksflächen anhand der nachfolgenden Zeichnungen beschrieben. Diese sind nicht einschränkend auszulegen und werden als Bestandteil der Beschreibung verstanden:

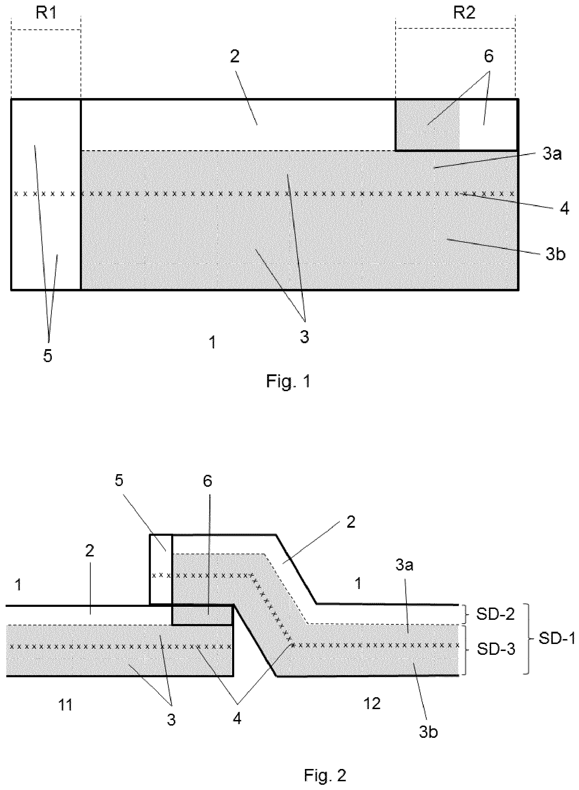

- Fig. 1: zeigt beispielhaft eine Bitumenbahn (1) mit einer oberen Bitumenschicht (2) ohne Wurzelschutz-Additiv und eine untere Bitumenschicht (3) mit organischem Wurzelschutz-Additiv (grau dargestellt). Die obere Bitumenschicht (2) basiert auf der Bitumenmischung BM-2 und die untere Bitumenschicht (3) auf der Bitumenmischung BM-3. In dieser Darstellung ist beispielhaft die Verstärkungsschicht (4) innerhalb der unteren Bitumenschicht (3) angeordnet, wodurch sich diese in eine Bitumenschicht (3a) und eine Bitumenschicht (3b) unterteilt. Die Bitumenschicht (3a) befindet sich zwischen der oberen Bitumenschicht (2) und der Verstärkungsschicht (4) und die Bitumenschicht (3b) ist an der Seite der Verstärkungsschicht (4) angeordnet, welche der Bitumenschicht (3a) gegenüberliegt. Somit bildet die Bitumenschicht (3b) den unteren Teil der Bitumenbahn (1), welcher sich beim Verlegen bevorzugt zur Bauwerksfläche hin befindet. Die Bitumenschichten (3a) und (3b) können den gleichen oder einen unterschiedlichen Gehalt an organischem Wurzelschutz-Additiv aufweisen. Zudem können sie auch die gleiche oder eine unterschiedliche Zusammensetzung besitzen. Die Verstärkungsschicht (4) kann optional vor und/oder während dem Herstellen der Bitumenbahn (1) mit organischem Wurzelschutz-Additiv in Kontakt gebracht werden.
Die Bitumenbahn (1) in Fig. 1 weist zudem einen Rand R1 mit einer seitlichen Randschicht (5) auf, welche kein Wurzelschutz-Additiv enthält. Zudem weist die dargestellte Bitumenbahn (1) beispielhaft einen Rand R2 mit einem Randbereich (6) auf. Der in Fig. 1 dargestellte Randbereich (6) mit mindestens einem organischen Wurzelschutz-Additiv weist einen Teil mit Wurzelschutz-Additiv auf (grau dargestellt) und einen Teil ohne Wurzelschutz-Additiv. Der Rand R2 ist bevorzugt an derjenigen Seite der Bitumenbahn (1) angeordnet, die dem Rand R1 der Bitumenbahn (1) gegenüber liegt. Das Verhältnis der Schichtdicke zur Breite der dargestellten Bitumenbahn (1) ist beispielhaft gewählt.
- Fig. 2: zeigt zwei Bitumenbahnen (1), wobei von der ersten Bitumenbahn (11) der Rand R2 mit dem Randbereich (6) vom Rand R1 der zweiten Bitumenbahn (12) mit der seitlichen Randschicht (5) überlappt wird. Durch diese Anordnung befinden sich an der Oberfläche der nach dem erfindungsgemässen Verfahren abgedichteten Bauwerksflächen und auf den erfindungsgemäss abgedichteten Bauwerksflächen erhältlich nach dem erfindungsgemässen Verfahren nur Bitumenschichten, welche kein Wurzelschutz-Additiv umfassen. Dies verhindert - oder reduziert zumindest signifikant - die Auswaschung des organischen Wurzelschutz-Additivs aus den entsprechenden Bitumenschichten, was wiederum die Wirkdauer des organischen Wurzelschutz-Additivs in den erfindungsgemässen Bitumenbahnen (1, 11, 12), in den nach dem erfindungsgemässen Verfahren abgedichteten Bauwerksflächen sowie in den Bauwerksflächen erhältlich nach dem erfindungsgemässen Verfahren deutlich erhöht.
Fig. 2 zeigt zudem auch die Randzonen zwischen den zwei verlegten Bitumenbahnen. Denn wenn beispielsweise in der Randzone das organische Wurzelschutz-Additiv ausgewaschen wird, können Wurzeln zwischen den beiden Bahnen hindurch in den Untergrund wachsen und so abgedeckte Bauwerksflächen durchdringen. Dies wird nun mit der erfindungsgemässen, bevorzugten Ausführungsform des Randes R-2 mit dem Randbereich (6) signifikant unterbunden. Denn in einer solchen, erfindungsgemäss bevorzugten Randzone kann einerseits das organische Wurzelschutz-Additiv kaum ausgewaschen werden, da es durch Bitumenschichten ohne Wurzelschutz-Additiv (2, 5) abgedeckt ist. Und andererseits müssten Wurzeln entlang dem Überlappungsbereich zwischen der ersten und der zweiten Bitumenbahn (11, 12) wachsen, was jedoch durch vorhandenes Wurzelschutz-Additiv verhindert wird. Bei der dargestellten, erfindungsgemässen, bevorzugten Ausführungsform ist jedoch gerade in diesem Bereich eine ausreichende Menge an organischem Wurzelschutz-Additiv vorhanden. Somit werden Schwachstellen von herkömmlichen Bitumenbahnen auf einfache Art und Weise effektiv beseitigt.
- Fig. 3: zeigt analog Fig. 2 zwei Bitumenbahnen (1), wobei von der ersten Bitumenbahn (11) der Rand R2 mit dem Randbereich (6) vom Rand R1 mit einer etwas grösseren seitlichen Randschicht (5) der zweiten Bitumenbahn (12) überlappt wird.
- Fig. 4: zeigt analog Fig. 2 zwei Bitumenbahnen (1). Der Rand R2 mit dem Randbereich (6) der ersten Bitumenbahn (11) umfasst keine obere Bitumenschicht, wodurch die untere Bitumenschicht (3) und/oder die
Verstärkungsschicht (4) anstelle der Bitumenschicht (2) die Oberfläche der Bitumenbahn (1) bilden und eine Aussparung bilden. Der Rand R1 der zweiten Bitumenbahn (12) mit der seitlichen Randschicht (5) kann somit beim Verlegen in die Aussparung gelegt werden.
Die Verstärkungsschicht der in Fig. 4 dargestellten ersten Bitumenbahn (11) ist beispielhaft zwischen der oberen und unteren Bitumenschicht (2, 3) dargestellt. Und die Verstärkungsschicht (4) der zweiten Bitumenbahn (12) ist beispielhaft innerhalb der oberen Bitumenschicht (2) dargestellt, wodurch die Bitumenschicht (2) somit in eine Bitumenschicht (2a) und eine Bitumenschicht (2b) unterteilt ist, wobei die Bitumenschicht (2b) zwischen der Verstärkungsschicht (4) und der unteren Bitumenschicht (3) und die Bitumenschicht (2a) an der Seite der Verstärkungsschicht (4) angeordnet sind, welche der Bitumenschicht (2b) gegenüberliegt. Dabei können die Bitumenschichten (2a, 2b) die gleiche oder eine unterschiedliche Zusammensetzung aufweisen.

## Patentansprüche

1. Bitumenbahn mit Wurzelschutz (1) zum Abdichten von Bauwerksflächen umfassend eine obere Bitumenschicht (2), eine untere Bitumenschicht (3), mindestens eine Verstärkungsschicht (4) und ein Wurzelschutz-Additiv, wobei die Verstärkungsschicht (4) zwischen der oberen Bitumenschicht (2) und der unteren Bitumenschicht (3), innerhalb der oberen Bitumenschicht (2) und/oder innerhalb der unteren Bitumenschicht (3) angeordnet ist, wobei die obere Bitumenschicht (2) kein Wurzelschutz-Additiv enthält, ausser gegebenenfalls entlang eines Teils eines Randbereichs (6) an einem Rand R2 der Bitumenbahn (1), **dadurch gekennzeichnet, dass** die untere Bitumenschicht (3) und/oder die Verstärkungsschicht (4) ein organisches Wurzelschutz-Additiv enthält, wobei die untere Bitumenschicht (3), sowie die obere Bitumenschicht (2) und die Verstärkungsschicht (4), entlang mindestens eines Randes der Bitumenbahn (1) eine seitliche Randschicht (5) umfasst, die kein Wurzelschutz-Additiv enthält, und so einen ersten Rand R1 der Bitumenbahn (1) bildet.

2. Bitumenbahn (1) nach Anspruch 1, **dadurch gekennzeichnet, dass** das organische Wurzelschutz-Additiv ein Herbizid, ein Fungizid und/oder ein Biozid umfasst.

3. Bitumenbahn (1) nach mindestens einem der Ansprüche 1 oder 2, **dadurch gekennzeichnet, dass** die Bitumenbahn (1) das organische Wurzelschutz-Additiv in einer Menge von 0,01 bis 3 Gew.-%, bevorzugt von 0,05 bis 1 Gew.-%, bezogen auf die Gesamtmasse der Bitumenbahn (1) mit organischem Wurzelschutz-Additiv, umfasst.

4. Bitumenbahn (1) nach mindestens einem der Ansprüche 1 bis 3, **dadurch gekennzeichnet, dass** die Schichtdicke SD-2 der oberen Bitumenschicht (2) gleich gross oder kleiner ist als die Schichtdicke SD-3 der unteren Bitumenschicht (3), wobei die Schichtdicken SD-2 und SD-3 die Schichtdicke SD-1 der Bitumenbahn (1) bilden.

5. Bitumenbahn (1) nach mindestens einem der Ansprüche 1 bis 4, **dadurch gekennzeichnet, dass**
- die Verstärkungsschicht (4) innerhalb der oberen Bitumenschicht (2) angeordnet ist und die Bitumenschicht (2) somit in eine Bitumenschicht (2a) und eine Bitumenschicht (2b) unterteilt ist, wobei die Bitumenschicht (2b) zwischen der Verstärkungsschicht (4) und der unteren Bitumenschicht (3) und die Bitumenschicht (2a) an der Seite der Verstärkungsschicht (4) angeordnet sind, welche der Bitumenschicht (2b) gegenüberliegt, wobei die Bitumenschicht (2a) und die Bitumenschicht (2b) die gleiche oder eine unterschiedliche Zusammensetzung aufweisen, und/oder
- die Verstärkungsschicht (4) innerhalb der unteren Bitumenschicht (3) angeordnet ist und die Bitumenschicht (3) somit in eine Bitumenschicht (3a) und eine Bitumenschicht (3b) unterteilt ist, wobei die Bitumenschicht (3a) zwischen der oberen Bitumenschicht (2) und der Verstärkungsschicht (4) und die Bitumenschicht (3b) an der Seite der Verstärkungsschicht (4) angeordnet sind, welche der Bitumenschicht (3a) gegenüberliegt, wobei die Bitumenschicht (3a) und die Bitumenschicht (3b) die gleiche oder eine unterschiedliche Zusammensetzung aufweisen.

6. Bitumenbahn (1) nach mindestens einem der Ansprüche 1 bis 5, **dadurch gekennzeichnet, dass** die obere Bitumenschicht (2) entlang mindestens eines Randes R2 der Bitumenbahn (1) einen Randbereich (6) aufweist, wobei mindestens ein Teil des Randbereichs (6)
- eine obere Bitumenschicht mit mindestens einem organischen Wurzelschutz-Additiv umfasst, oder
- keine obere Bitumenschicht umfasst, wodurch die untere Bitumenschicht (3) und/oder die Verstärkungsschicht (4) anstelle der Bitumenschicht (2) die Oberfläche der Bitumenbahn (1) bilden.

7. Bitumenbahn (1) nach mindestens einem der Ansprüche 1 bis 6, **dadurch gekennzeichnet, dass** die Bitumenbahn (1) einen Randbereich (6) mit einem Rand R2 und zusätzlich einen Randbereich (5) mit einem Rand R1 umfasst, wobei der Rand R2 bevorzugt an der Seite der Bitumenbahn (1) angeordnet ist, die dem Rand R1 der Bitumenbahn (1) gegenüber liegt.

8. Verfahren zur Herstellung der Bitumenbahn (1) nach mindestens einem der Ansprüche 1 bis 7, **dadurch gekennzeichnet, dass** die obere Bitumenschicht (2) mit einer Bitumenmischung BM-2 und die untere Bitumenschicht (3) mit einer Bitumenmischung BM-3 hergestellt werden, wobei das organische Wurzelschutz-Additiv
a) in die Bitumenmischung BM-3 eingearbeitet wird bevor die Bitumenschicht (3) hergestellt wird, wobei somit die Bitumenmischung BM-3 das organische Wurzelschutz-Additiv umfasst, und/oder
b) mit der Verstärkungsschicht (4) in Kontakt gebracht wird, bevor und/oder während die Verstärkungsschicht (4) und die Bitumenmischungen BM-2 und BM-3 zur Bitumenbahn (1) verarbeitet werden.

9. Verfahren nach Anspruch 8, **dadurch gekennzeichnet, dass** die obere und untere Bitumenschicht (2, 3) und die Verstärkungsschicht (4) miteinander in Kontakt gebracht werden und beim Rand R1 ein Teil der unteren Bitumenschicht (3) abgetragen und durch eine Bitumenschicht ohne Wurzelschutz-Additiv, insbesondere mit der Bitumenmischung BM-2, ersetzt wird.

10. Verfahren nach Anspruch 8 oder 9, **dadurch gekennzeichnet, dass** beim Rand R2 der Randbereich (6) hergestellt wird indem beim Rand R2
a) auf die untere Bitumenschicht (3) und/oder auf die Verstärkungsschicht (4) keine Bitumenmischung BM-2 aufgetragen wird, wodurch keine obere Bitumenschicht (2) gebildet wird, und/oder
b) die Bitumenmischung BM-2 nach deren Auftrag und/oder die daraus hergestellte obere Bitumenschicht (2), oder ein Teil davon, entfernt wird,
wobei gegebenenfalls anschliessend beim Rand R2, wo die Bitumenmischung BM-2 und/oder die obere Bitumenschicht (2) entfernt oder nicht gebildet wurde, eine organisches Wurzelschutz-Additiv enthaltende Bitumenmischung BM-6 aufgetragen wird.

11. Verfahren zum Abdichten von Bauwerksflächen mit der Bitumenbahn (1) nach mindestens einem der Ansprüche 1 bis 7 und/oder hergestellt nach mindestens einem der Ansprüche 8 bis 10, **dadurch gekennzeichnet, dass** eine erste Bitumenbahn (11) auf der Bauwerksfläche verlegt wird und eine zweite Bitumenbahn (12) so auf der Bauwerksfläche verlegt wird, dass ein Rand der zweiten Bitumenbahn (12) einen Rand der ersten Bitumenbahn (11) überlappt, wobei die unteren Bitumenschichten (3) der ersten und zweiten Bitumenbahn (11, 12) bevorzugt der Bauwerksfläche zugewandt angeordnet sind.

12. Verfahren nach Anspruch 11, **dadurch gekennzeichnet, dass** der Rand der ersten Bitumenbahn (11), welcher vom Rand der zweiten Bitumenbahn (12) überlappt wird, ein Rand R2 mit Randzone (6) ist, wobei bevorzugt der Rand der zweiten Bitumenbahn (12) in oder auf die Randzone (6) des Randes R2 gelegt wird, wobei der überlappende Rand der zweiten Bitumenbahn (12) bevorzugt als Rand R1 ausgebildet ist.

13. Abgedichtete Bauwerksflächen erhältlich nach dem Verfahren gemäss Anspruch 11 oder 12.

14. Verwendung der Bitumenbahn (1) nach mindestens einem der Ansprüche 1 bis 7 und hergestellt nach mindestens einem der Ansprüche 8 bis 10 zum Abdichten von Bauwerksflächen, insbesondere Gebäudedächer, von Innen- und Aussenbereiche von Tunnels, Überdachungen wie Strassen- und/oder Eisenbahn-Überdachungen, Brücken und/oder Schwimmbäder.

15. Verwendung nach Anspruch 14, **dadurch gekennzeichnet, dass** die Bauwerksflächen Beton, Metall, Stahl, Stahlblech und/oder Holz umfassen und/oder dass die abgedichteten Bauwerksflächen, insbesondere Gebäudedächer, begrünt werden.

## Claims

1. Bitumen sheet with root protection (1) for sealing off construction surfaces comprising an upper bitumen layer (2), a lower bitumen layer (3), at least one reinforcement layer (4) and a root protection additive, wherein the reinforcement layer (4) is arranged between the upper bitumen layer (2) and the lower bitumen layer (3), within the upper bitumen layer (2) and/or within the lower bitumen layer (3), wherein the upper bitumen layer (2) contains no root protection additive, apart from possibly along part of an edge area (6) on an edge R2 of the bitumen sheet (1),
**characterised in that** the lower bitumen layer (3) and/or the reinforcement layer (4) contain(s) an organic root protection additive, wherein the lower bitumen layer (3) as well as the upper bitumen layer (2) and the reinforcement layer (4) along at least one edge of the bitumen sheet (1) comprises a lateral edge layer (5) which does not contain any root protection additive and thus forms a first edge R1 of the bitumen sheet (1).

2. Bitumen sheet (1) according to claim 1 **characterised in that** the organic root protection additive comprises a herbicide, a fungicide and/or a biocide.

3. Bitumen sheet (1) according to at least one of claims 1 or 2 **characterised in that** the bitumen sheet (1) contains the organic root protection additive in a quantity of 0.01 to 3% by weight, preferably 0.05 to 1% by weight in relation to the total mass of the bitumen sheet (1) with organic root protection additive.

4. Bitumen sheet (1) according to at least one of claims 1 to 3 **characterised in that** the layer thickness SD-2 of the upper bitumen layer (2) is equal to or less than the layer thickness SD-3 of the lower bitumen layer (3), wherein the layer thicknesses SD-2 and SD-3 form the layer thickness SD-1 of the bitumen sheet (1).

5. Bitumen sheet (1) according to at least one of claims 1 to 4 **characterised in that**
- the reinforcement layer (4) is arranged within the upper bitumen layer (2) and the bitumen layer (2) is thus divided into a bitumen layer (2a) and a bitumen layer (2b), wherein the bitumen layer (2b) is arranged between the reinforcement layer (4) and the lower bitumen layer (3) and the bitumen layer (2a) is arranged on the side of the reinforcement layer (4) which is opposite the bitumen layer (2b), wherein the bitumen layer (2a) and the bitumen layer (2b) have the same or a different composition and/or
- the reinforcement layer (4) is arranged within the lower bitumen layer (3) and the bitumen layer (3) is thus divided into a bitumen layer (3a) and a bitumen layer (3b), wherein the bitumen layer (3a) is arranged between the upper bitumen layer (2) and the reinforcement layer (4) and the bitumen layer (3b) is arranged on the side of the reinforcement layer (4) which is opposite the bitumen layer (3a), wherein the bitumen layer (3a) and the bitumen layer (3b) have the same or a different composition.

6. Bitumen sheet (1) according to at least one of claims 1 to 5, **characterised in that** the upper bitumen layer (2) along at least one edge R2 of the bitumen sheet (1) comprises an edge area (6), wherein at least one part of the edge area (6)
- comprises an upper bitumen layer with at least one organic root protection additive, or
- does not comprise an upper bitumen layer, through which the lower bitumen layer (3) and/or the reinforcement layer (4) form the surface of the bitumen sheet (1) instead of bitumen layer (2).

7. Bitumen sheet (1) according to at least one of claims 1 to 6 **characterised in that** the bitumen sheet (1) comprises an edge area (6) with an edge R2 and also an edge layer (5) with an edge R1, wherein the edge R2 is preferably arranged on the side of the bitumen sheet (1) which is opposite the edge R1 of the bitumen sheet (1) .

8. Method of producing the bitumen sheet (1) according to at least one of claims 1 to 7 **characterised in that** the upper bitumen layer (2) is produced with a bitumen mixture BM-2 and the lower bitumen layer (3) with a bitumen mixture BM-3, wherein the root protection additive
a) is incorporated into the bitumen mixture BM-3 before the bitumen layer (3) is produced, wherein the bitumen mixture BM-3 thus contains the organic root protection additive, and /or
b) is brought into contact with the reinforcement layer (4) before and/or while the reinforcement layer (4) and the bitumen mixtures BM-2 and BM-2 are made into the bitumen sheet (1).

9. Method according to claim 8 **characterised in that** upper and lower bitumen layer (2, 3) and reinforcement layer (4) are brought into contact with each other and in the case of the edge R1 a part of lower bitumen layer (3) is removed and replaced with a bitumen layer without root protection additive, in particular with the bitumen mixture BM-2.

10. Method according to claim 8 or 9 **characterised in that** in the case of edge R2 the edge area (6) is produced **in that** in edge R2
a) no bitumen mixture BM-2 is applied to the lower bitumen layer (3) and/or to the reinforcement layer (4) through which no upper bitumen layer (2) is formed, and/or
b) after its application the bitumen layer BM-2 or the upper bitumen layer (2), or part thereof, resulting therefrom is removed,
wherein, if applicable, on edge R2 where the bitumen mixture BM-2 and/or the upper bitumen layer (2) was removed or not formed, a bitumen mixture BM-6 containing an organic root protection additive is applied.

11. Method of sealing off construction surfaces with the bitumen sheet (1) according to at least one of claims 8 to 10, **characterised in that** a first bitumen sheet (11) is laid on the construction surface and a second bitumen sheet (12) is laid on the construction surface in such a way that an edge of the second bitumen sheet (12) overlaps an edge of the first bitumen sheet (11), wherein the lower bitumen layers (3) of the first and second bitumen sheet (11, 12) are preferably arranged facing the construction surface.

12. Method according to claim 11 **characterised in that** the edge of the first bitumen sheet (11), which is overlapped by the edge of the second bitumen sheet (12), is an edge with edge zone (6), wherein preferably the edge of the second bitumen sheet (12) is laid in or on the edge zone (6) of the edge R2, wherein the overlapping edge of the second bitumen sheet (12) is preferably formed as edge R1.

13. Sealed off construction surface obtainable with the method according to claim 11 or 12.

14. Use of the bitumen sheet (1) according to at least one of claims 1 to 7 and produced according to at least one of claims 8 to 10 for sealing off construction surfaces, in particular building roofs, inner or outer areas of tunnels, canopies such as road or railway canopies, bridges and/or swimming pools.

15. Use according to claim 14 **characterised in that** the construction surfaces comprise concrete, metal, steel, sheet steel and/or timber and/or **in that** the sealed off construction surfaces, in particular building roofs are planted with greenery.

## Revendications

1. Bande de bitume, pourvue d'une protection anti-racines (1), destinée à assurer l'étanchéité de surfaces d'ouvrages de construction, comprenant une couche de bitume supérieure (2), une couche de bitume inférieure (3), au moins une couche de renfort (4) et un additif protecteur anti-racines, la couche de renfort (4) étant placée entre la couche de bitume supérieure (2) et la couche de bitume inférieure (3), à l'intérieur de la couche de bitume supérieure (2) et/ou à l'intérieur de la couche de bitume inférieure (3), la couche de bitume supérieure (2) ne contenant aucun additif protecteur anti-racines, hormis le cas échéant, le long d'une partie d'une zone de bordure (6) sur un bord R2 de la bande de bitume (1), **caractérisée en ce que** la couche de bitume inférieure (3) et/ou la couche de renfort (4) contient un additif protecteur anti-racines organique, la couche de bitume inférieure (3), ainsi que la couche de bitume supérieure (2) et la couche de renfort (4), comprenant le long d'au moins un bord de la bande de bitume (1) une couche de bordure (5) latérale, qui ne contient aucun additif protecteur anti-racines, et forme ainsi un premier bord R1 de la bande de bitume (1) .

2. Bande de bitume (1) selon la revendication 1, **caractérisée en ce que** l'additif protecteur anti-racines organique comprend un herbicide, un fongicide et/ou un biocide.

3. Bande de bitume (1) selon au moins l'une quelconque des revendications 1 ou 2, **caractérisée en ce que** la bande de bitume (1) comprend l'additif protecteur anti-racines organique dans une quantité de 0,01 à 3 % en poids, de préférence de 0,05 à 1 % en poids, rapportée à la masse totale de la bande de bitume (1) avec additif protecteur anti-racines organique.

4. Bande de bitume (1) selon au moins l'une quelconque des revendications 1 à 3, **caractérisée en ce que** l'épaisseur de couche SD-2 de la couche de bitume supérieure (2) est inférieure ou égale à l'épaisseur de couche SD-3 de la couche de bitume inférieure (3), les épaisseurs de couche SD-2 et SD-3 formant l'épaisseur de couche SD-1 de la bande de bitume (1).

5. Bande de bitume (1) selon au moins l'une quelconque des revendications 1 à 4, **caractérisée en ce que**
- la couche de renfort (4) est placée à l'intérieur de la couche de bitume supérieure (2) et la couche de bitume (2) est ainsi divisée en une couche de bitume (2a) et une couche de bitume (2b), la couche de bitume (2b) étant placée entre la couche de renfort (4) et la couche de bitume inférieure (3) et la couche de bitume (2a) étant placée sur le côté de la couche de renfort (4), lequel est opposé à la couche de bitume (2b), la couche de bitume (2a) et la couche de bitume (2b) comportant la même composition ou une composition différente, et/ou
- la couche de renfort (4) est placée à l'intérieur de la couche de bitume inférieure (3) et la couche de bitume (3) est ainsi divisée en une couche de bitume (3a) et une couche de bitume (3b), la couche de bitume (3a) étant placée entre la couche de bitume supérieure (2) et la couche de renfort (4) et la couche de bitume (3b) étant placée sur le côté de la couche de renfort (4), lequel est opposé à la couche de bitume (3a), la couche de bitume (3a) et la couche de bitume (3b) comportant la même composition ou une composition différente.

6. Bande de bitume (1) selon au moins l'une quelconque des revendications 1 à 5, **caractérisée en ce que** la couche de bitume supérieure (2) comporte le long d'un bord R2 de la bande de bitume (1) une zone de bordure (6), au moins une partie de la zone de bordure (6) comprenant
- une couche de bitume supérieure avec au moins un additif protecteur anti-racines organique, ou
- ne comprenant aucun couche de bitume supérieure, suite à quoi, la couche de bitume inférieure (3) et/ou la couche de renfort (4) forment non pas la couche de bitume (2), mais la surface de la bande de bitume (1).

7. Bande de bitume (1) selon au moins l'une quelconque des revendications 1 à 6, **caractérisée en ce que** la bande de bitume (1) comprend une zone de bordure (6) avec un bord R2 et additionnellement, une couche de bordure (5) avec un bord R1, le bord R2 étant placé de préférence sur le côté de la bande de bitume (1) qui est opposé au bord R1 de la bande de bitume (1).

8. Procédé, destiné à la fabrication de la bande de bitume (1) selon au moins l'une quelconque des revendications 1 à 7, **caractérisé en ce qu'**on fabrique la couche de bitume supérieure (2) avec un mélange bitumeux BM-2 et la couche de bitume inférieure (3) avec un mélange bitumeux BM-3, l'additif protecteur anti-racines organique
a) étant incorporé dans le mélange bitumeux BM-3 avant la fabrication de la couche de bitume (3), le mélange bitumeux BM-3 comprenant ainsi l'additif protecteur anti-racines organique, et/ou
b) est amené en contact avec la couche de renfort (4) avant et/ou pendant la mise en œuvre de la couche de renfort (4) et des mélanges bitumeux BM-2 et BM-3 pour obtenir la bande de bitume (1).

9. Procédé selon la revendication 8, **caractérisé en ce qu'**on amène en contact mutuel la couche de bitume supérieure et inférieure (2, 3) et la couche de renfort (4) et sur le bord R1, on enlève une partie de la couche de bitume inférieure (3) et on la remplace par une couche de bitume sans additif protecteur anti-racines, notamment par le mélange bitumeux BM-2.

10. Procédé selon la revendication 8 ou 9, **caractérisé en ce qu'**on créé sur le bord R2 la zone de bordure (6) **en ce que**
a) sur le bord R2, on n'applique aucun mélange bitumeux BM-2 sur la couche de bitume inférieure (3) et/ou sur la couche de renfort (4), suite à quoi, aucune couche de bitume supérieure (2) n'est formée, et/ou
b) on retire le mélange bitumeux BM-2 après son application et/ou la couche de bitume supérieure (2) fabriquée à partir de celui-ci, ou une partie de celle-ci
étant appliqué par la suite le cas échéant, près du bord R2, où le mélange bitumeux BM-2 et/ou la couche de bitume supérieure (2) a été retirée ou n'a pas été formée un mélange bitumeux BM-6 contenant un additif protecteur anti-racines organique.

11. Procédé, destiné à assurer l'étanchéité de surfaces d'ouvrages de construction avec la bande de bitume (1) selon au moins l'une quelconque des revendications 1 à 7 et/ou fabriquée selon au moins l'une quelconque des revendications 8 à 10, **caractérisé en ce qu'**on pose une première bande de bitume (11) sur la surface d'ouvrages de construction et une deuxième bande de bitume (12) sur la surface d'ouvrages de construction, de telle sorte qu'un bord de la deuxième bande de bitume (12) chevauche un bord de la première bande de bitume (11), les couches de bitume inférieures (3) des première et deuxième bandes de bitume (11, 12) étant placées de préférence en étant tournées vers la surface d'ouvrages de construction.

12. Procédé selon la revendication 11, **caractérisé en ce que** le bord de la première bande de bitume (11), lequel est chevauché par le bord de la deuxième bande de bitume (12) est un bord R2 avec une zone de bordure (6),
de préférence, le bord de la deuxième bande de bitume (12) étant posé dans ou sur la zone de bordure (6) du bord R2, le bord chevauchant de la deuxième bande de bitume (12) étant conçu de préférence sous la forme de bord R1.

13. Surfaces d'ouvrages de construction étanchéifiées, susceptibles d'être obtenues d'après le procédé selon la revendication 11 ou 12.

14. Utilisation de la bande de bitume (1) selon au moins l'une quelconque des revendications 1 à 7 et fabriquée selon au moins l'une quelconque des revendications 8 à 10, pour assurer l'étanchéité de surfaces d'ouvrages de construction, notamment de toits de bâtiments, de zones intérieures et extérieures de tunnels, de couvertures, comme des couvertures routières et/ou ferroviaires, de ponts et/ou de piscines.

15. Utilisation selon la revendication 14, **caractérisée en ce que** les surfaces d'ouvrages de construction comprennent du béton, du métal, de l'acier, de la tôle d'acier et/ou du bois et/ou **en ce qu'**on végétalise les surfaces d'ouvrages de constructions étanchéifiées, notamment les toits de bâtiments.
